# EUROPEAN PATENT APPLICATION

(11) **EP 0 917 986 A1**
(43) Date of publication of application: **26.05.1999**
(21) Application number: 98308968.1
(22) Date of filing: 03.11.1998
(51) Int. Cl.: B60R 1/08

(54) **Rear view mirror**

(30) Priority: 19.11.1997 GB 9724327
(71) Applicant: BRITAX (GECO) S.A., F-77981 St. Fargeau-Ponthierry Cédex (FR)
(72) Inventor: Dumont, Daniel, 77250 Veneux Les Sablons (FR); Bade, Yves, 89000 Auxerre (FR)
(74) Representative: Hollinghurst, Antony

(57) **Abstract**

A reflective member for a rear view mirror comprises a prism (38) with front and rear non-planar reflective surfaces (40, 42) with a reflective coating on the rear reflective surface (40) located behind the first reflective surface (42). The prism (38) is movable between a first position in which an incident ray (48) is visible to a user as a reflected ray (48) from the second reflective surface (42), and a second position in which the incident ray (48) is visible to a user as a reflected ray (52) from the first reflective surface (40). The curvature of each part of the first reflective surface (40) is the same as the curvature of the corresponding part of the second reflective surface (42) so that the two images are of the same size. This minimises any risk of confusing the driver as the prism (38) is changed between its first and second positions.

## Description

This invention relates to a rear view mirror of the type having a first non-planar reflective surface, a second non-planar reflective surface of higher reflectivity than the first reflective surface located behind the first reflective surface so as to be visible through the first reflective surface, and mounting means for supporting the second reflective surface for movement between a first position in which an image of a predetermined field of view is visible to the user reflected from the second reflective surface and a second position in which an image of said field of view is visible to the user reflected from the first reflective surface.

Mirrors of this type are commonly used with the second reflective surface normally in its first position. If the user is dazzled by the headlights of a following vehicle, the second reflective surface can be moved to its second position so that only a small proportion of the light from such headlights is reflected from the second reflective surface on to the eyes of the user. To avoid misleading a user, it is desirable for the perceived size of objects in the reflected field of view to be the same for both positions of the second reflective surface.

A mirror of this type is described in and JP-U-1535/73. The first reflective surface comprises the convex outer surface of a transparent part-spherical cover for an opening in a housing. The second reflective surface comprises the convex front surface of a pivoting member which is mounted within the housing for angular movement between said first position in which said convex front surface abuts against the concave inner surface of the cover. Because of the thickness of the transparent cover, the radius of curvature of its convex surface is greater than the radius of curvature of its concave surface. The radius of curvature of the front surface of the pivoting member is slightly less than the radius of curvature of the concave surface of the transparent cover. Consequently, the perceived size of objects in the reflected field of view changes as the pivoting member moves between its first and second positions.

According to the invention, in an exterior mirror of the type described above, the first and second reflective surfaces are of the same shape, the curvature of each part of the first reflective surface being the same as the curvature of the corresponding part of the second reflective surface.

Preferably, the first and second reflective surfaces are the front and rear surfaces of a prism, the angle between each part of the first reflective surface and the corresponding part of the second reflective surface being equal to the angle through which the second reflective surface is moved between its first position and its second position.

The reflective surfaces may be of spherical, aspheric or other non-planar shape. When the second reflective surface is of spherical convex shape, the first reflective surface is also of spherical convex shape and has the same radius of curvature as the first reflective surface.

An embodiment of the invention will now be described, by way of example, with reference to the accompanying drawings, in which:
Figure 1 is a side view of an exterior mirror in accordance with the invention mounted on a motor car, with the second reflective surface in its first position for normal day time use;
Figure 2 is a view from the rear of the motor car, of the mirror shown in Figure 1, with part of a door of the motor car in cross-section;
Figure 3 is a scrap cross-sectional view non the line 3 - 3 in Figure 2;
Figure 4 is a side view of the head of the mirror shown in Figure 1 partially broken away so as to show the edge of the reflective member; and
Figures 5 and 6 are side views, corresponding to Figures 1 and 4 respectively, but showing the mirror in its anti-dazzle orientation.

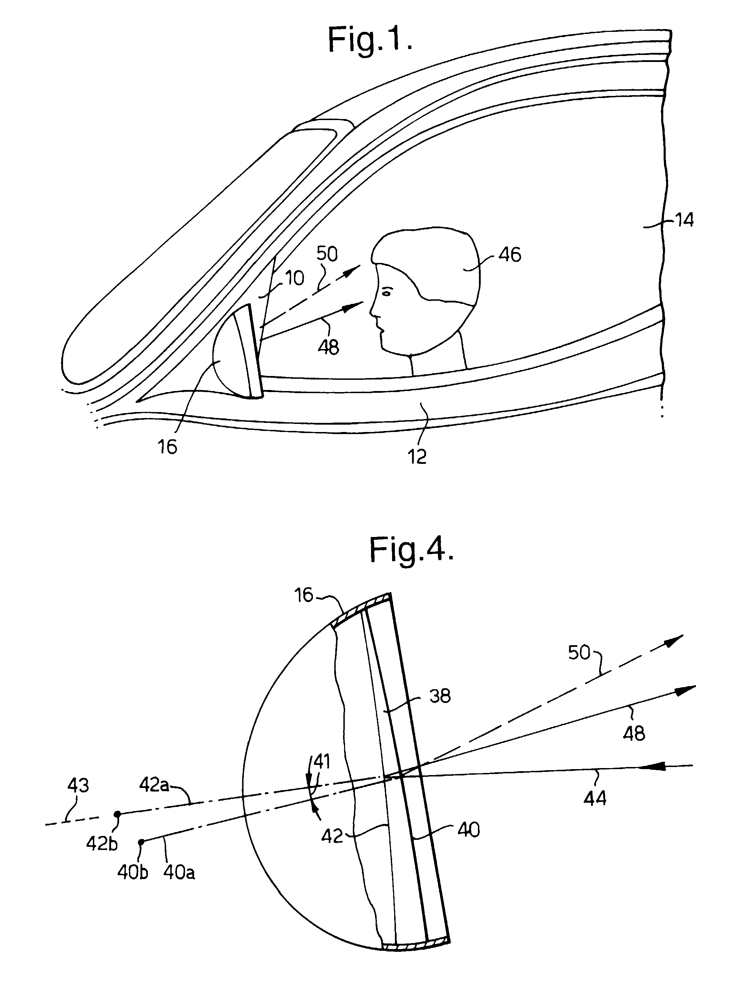

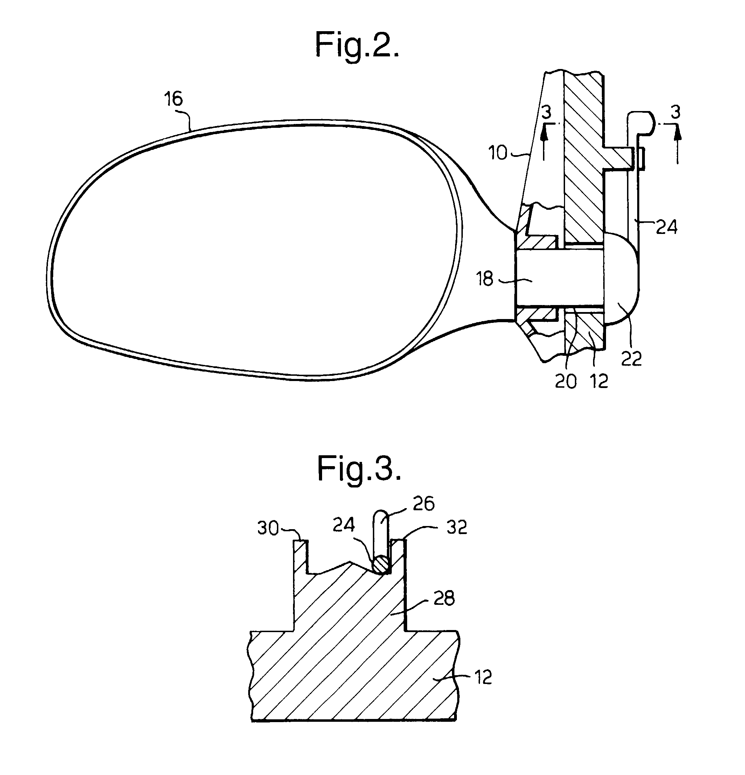

Figure 1 and 2 show an exterior mirror comprising a generally triangular bracket 10 adapted to be secured to a motor car door 12 at the bottom front corner of the window 14 thereof. A mirror head 16 is pivotally mounted on a shaft 18 which is journalled in the bracket 10 for angular movement about a horizontal axis. The shaft 18 projects through a hole 20 in the door 12 and has a knob 22 on its inboard end. A resilient arm 24 projects radially from the knob 22 and has a hand grip portion 26 on its radially outer end. The resilience of the arm 24 urges it into engagement with a latching projection 28 on the inside of the door 12. As can be seen in Figure 3, the projection 28 has two end stops 30 and 32 which limit the range of angular movement of the arm 24. Between the end stops 30 and 32, the arm 24 abuts against a cam formation having a raised central region 34.

Latching projection 28 and arm 24 are positioned so that arm 24 is bent away from projection 28 under bending stress which biasses arm 24 toward projection 28. With reference to Figure 3, when arm 24 is moved from right-to-left away from stop 32 and toward central region 34, the bending stress in arm 24 increases as it moves upwardly along the cam surface. When the arm 24 reaches the opposite side of central region 34, the bending stress in arm 24 biasses it against the opposite sloping cam surface to facilitate movement of the arm to its opposite position against stop 30. This arrangement provides two stable positions for the lever, one abutting the end stop 30 and the other abutting the end stop 32.

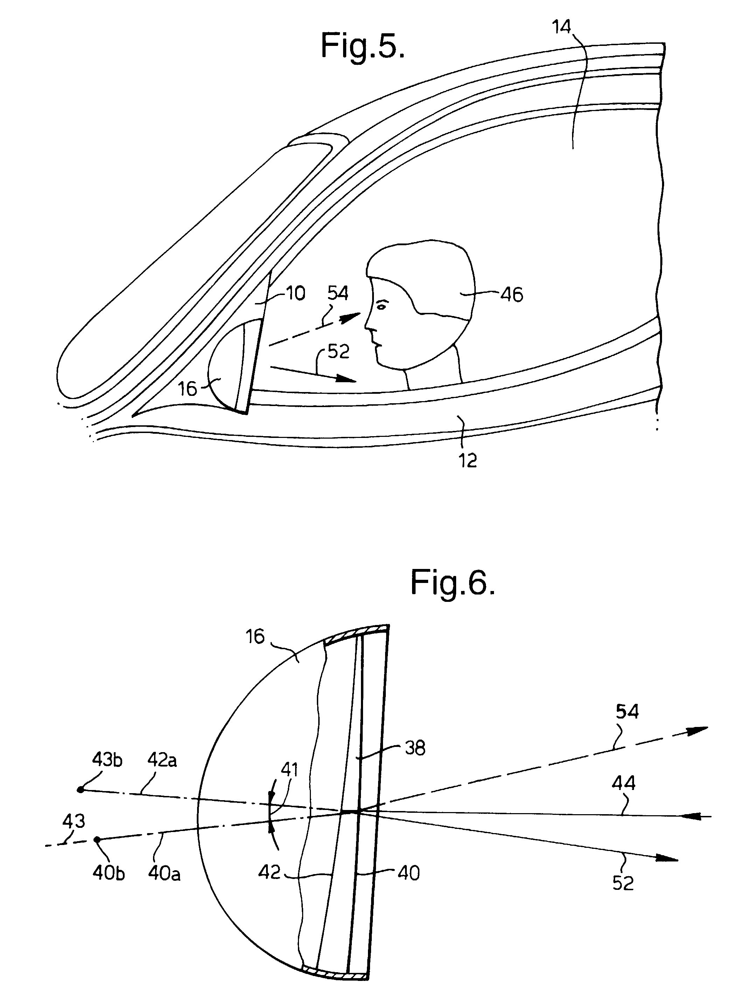

As can be seen from Figure 4, the mirror head 16 contains a glass prism 38 having a convex front surface 40 and a concave rear surface 42 of the same radius of curvature as the front surface. A reflective layer is applied to the rear surface 42.

With the mirror head 16 in its normal or daytime orientation, with the lever 24 abutting the end stop 32, as shown in Figures 1 to 4, most of the light incident horizontally from behind the vehicle, represented by the path 44, is reflected by the reflective coating on the rear surface 42 towards the eye of an observer such as the driver 46 of the motor car, as represented by the path 48. A small proportion of the incident light is reflected from the front surface 40, above the driver's head as represented by the dotted path 50.

As shown in Figure 4, front reflecting surface 40 has a focal axis and a focal length 40a that extends from front reflecting surface 40 to focal point 40b. Rear reflecting surface 42 has a focal axis and a focal length 42a that extends from rear reflecting surface 42 to focal point 42b. Focal length 40a is equal to focal length 42a. The two focal lengths extend along the front and rear focal axes 40a, 42a (shown as chain-dotted lines) that diverge in a direction from the front reflecting surface 40 toward the rear reflecting surface 42 at an angle 41 that is less than 10°.

In the mirror position of Figure 4, light 48 is reflected from rear reflecting surface 42 toward driver 46 and focal axis 42a of rear reflecting surface 42 is coincidental with an axis (herein termed the viewing axis) bisecting the angle between the incident path 44 and the reflected path 48 perceived by the driver 46 and illustrated by a dashed line 43.

When the mirror head 16 is tilted to the anti-dazzle position as shown in Figures 5 and 6 (with the lever 24 abutting the end stop 30), the mirror 38 is rotated clockwise from the position of Figure 4 to the position of Figure 6, thus moving focal axis 40a into a position coincidental with viewing axis 43 so that light is reflected along path 54 toward driver 46 from front surface 40. The included angle between incident and reflected paths 44, 48 in Figure 4 is the same as the included angle between incident and reflected paths 44, 54 in Figure 6. Consequently, only a small proportion of the incident light from behind the vehicle is reflected from the front surface 40 towards the driver's eye, as represented by the dotted path 54. Most of the incident light from behind the vehicle is reflected downwardly from the reflective layer on the rear surface 42 of the prism 38, along the path 52. Consequently, the driver sees a dimmer and therefore less dazzling image. Since the curvature of the front surface 40 is identical with that of the rear surface 42, the two images are of the same size, thereby minimising any risk of confusing the driver as the mirror head 16 is changed from its normal position to its anti-dazzle position and vice-versa.

Any known mechanism, including an electrically powered mechanism, may be used to effect movement of the mirror head between its normal position to its anti-dazzle position. Alternatively, the prism 38 may be mounted for tilting movement relative to the mirror head 16.

In the embodiment described above, the two reflective surfaces 40 and 42 are of part-spherical shape. The invention is also applicable to aspheric mirrors, in which case the curvature of each part of the first reflective surface is the same as the curvature of the corresponding part of the second reflective surface.

For best results, the variation between the curvatures of the two reflective surfaces should be than 2%, preferably not greater than 1%. However, acceptable results can be obtained with a variation of up to 5%.

In the embodiment described above, the two reflective surfaces 40 and 42 are of part-spherical shape. The invention is also applicable to aspheric mirrors, in which case the curvature of each part of the first reflective surface is the same as the curvature of the corresponding part of the second reflective surface.

## Claims

1. A rear view mirror having a first non-planar reflective surface (40), a second non-planar reflective surface (42) of higher reflectivity than the first reflective surface (40) located behind the first reflective surface (40) so as to be visible through the first reflective surface (40), and mounting means for supporting the second reflective surface (42) for movement between a first position in which an image of a predetermined field of view is visible to the user reflected from the second reflective surface (42) and a second position in which an image of said field of view is visible to the user reflected from the first reflective surface (40), characterised in that the first and second reflective surfaces (40, 42) are of the same shape, the curvature of each part of the first reflective surface (40) being the same as the curvature of the corresponding part of the second reflective surface (42).

2. A rear view mirror according to claim 1, wherein the first and second reflective surfaces (40, 42) are the front and rear surfaces of a prism, the angle between each part of the first reflective surface (40) and the corresponding part of the second reflective surface (42) being equal to the angle through which the second reflective surface (42) is moved between its first position and its second position.

3. A rear view mirror according to claim 1 or 2, wherein the second reflective surface (42) is of spherical convex shape, the first reflective surface (40) is also of spherical convex shape and has the same radius of curvature as the first reflective surface (40).
